# EUROPÄISCHE PATENTSCHRIFT

(11) **EP 1 780 445 B1**
(45) Veröffentlichungstag und Bekanntmachung des Hinweises auf die Patenterteilung: **09.12.2009**
(21) Anmeldenummer: 06021781.7
(22) Anmeldetag: 18.10.2006
(51) Int. Cl.: F16H 55/17, B29C 45/14, B29L 15/00, F16H 55/22

(54) **Zahnrad**
Gear
Roue dentée

(30) Priorität: 19.10.2005 DE 102005050438
(43) Veröffentlichungstag der Anmeldung: 02.05.2007
(73) Patentinhaber: IMS Gear GmbH, 78166 Donaueschingen (DE)
(72) Erfinder: Oberle, Stephan, 78050 Villingen-Schwenningen (DE)
(74) Vertreter: Patentanwälte Westphal, Mussgnug & Partner

(56) Entgegenhaltungen:
- WO-A-2004/065824
- JP-A- 8 145 146
- JP-A- 2001 116 052

## Beschreibung

Die Erfindung bezieht sich auf ein Zahnrad mit den oberbegrifflichen Merkmalen des Patentanspruchs 1 oder 2, wie dies in der JP 2001116052 A offenbart ist.

.WO 2004/065824 A, JP 08 145 146 und JP 2001 1160052 A beschreiben jeweils ein Zahnrad mit einem Zahnkranz und einem Einlageteil, auf das der Zahnkranz mittels Schirmguss umspritzt ist. Zur Halterung des Zahnkranzes auf dem Einlageteil ist das Einlageteil bei WO 2004/065824 A mit zur Angussseite hin mit einer Vielzahl von im Außenumfang des Einlageteils achsparallelen Vertiefungen und einer zur Angussseite abgewandten Seite mit einer ringförmigen und sich in radialer Richtung erstreckenden Erhebung versehen.

Die JP 08 145 146 A beschreibt eine Keilverzahnung am äußeren Außenumfang des Einlageteils.

Die JP 2001 116 052 A offenbart eine oder zwei am Außenumfang des Einlageteils in Umfangsrichtung herumlaufenden Rillen. Dabei kann die Außenumfangsfläche des Einlageteils gerändelt sein.

Als Zahnräder sind beispielsweise aus dem technischen Bereich von Servolenkungen so genannte EPAS-Zahnräder (EPAS: Electric Power Assisted Steering) bekannt, welche als zentrales Element eine große Metallnabe aufweisen, welche mit einem außenseitigen Guss-Polyamid-Ring verklebt ist. Unter einer großen Metallnabe wird dabei eine Metallnabe verstanden, deren Außendurchmesser größer als der halbe Außendurchmesser des Zahnrads ist. Anschließend wird der eigentliche Zahnkranz durch eine spanende Abtragung von Material des Guss-Polyamid-Rings verzahnt. Eine solche Verfahrensweise bei der Herstellung bedingt hohe Kosten, da eine Vielzahl aufwendiger Arbeitsschritte erforderlich ist. Ein weiterer Nachteil besteht darin, dass eine verklebte Verbindung des Außenumfangs der Metallnabe als einem Einlageteil eines solchen Zahnrads und des das Einlageteil umgebenden Zahnkranzes nur einen bedingt festen Sitz bei einwirkenden Kräften in Umfangs- bzw. Rotationsrichtung und in achsparallelen Richtungen bietet.

Weiterhin ist bekannt, wie eingangs bereits erwähnt, ein derartiges Einlageteil bei der Herstellung eines Zahnrads zur Ausbildung des Zahnkranzes mit Kunststoff zu umspritzen. Insbesondere, wenn dabei die Verzahnung zugleich mit ausgebildet wird, besteht beim Erkalten des gespritzten Kunststoffes eine Behinderung der Verzahnung im freien Schwindungsverhalten, wodurch der Kunststoffring permanent unter Zugspannung steht. Ebenfalls eine große behinderte Schwundspannung wird durch ein großes Einlageteil bewirkt, wenn ein solches mit Kunststoff umspritzt wird. Derartige Schwundspannungen wirken in radialer und axialer Richtung und bewirken insbesondere das Risiko eines Zahnbruchs.

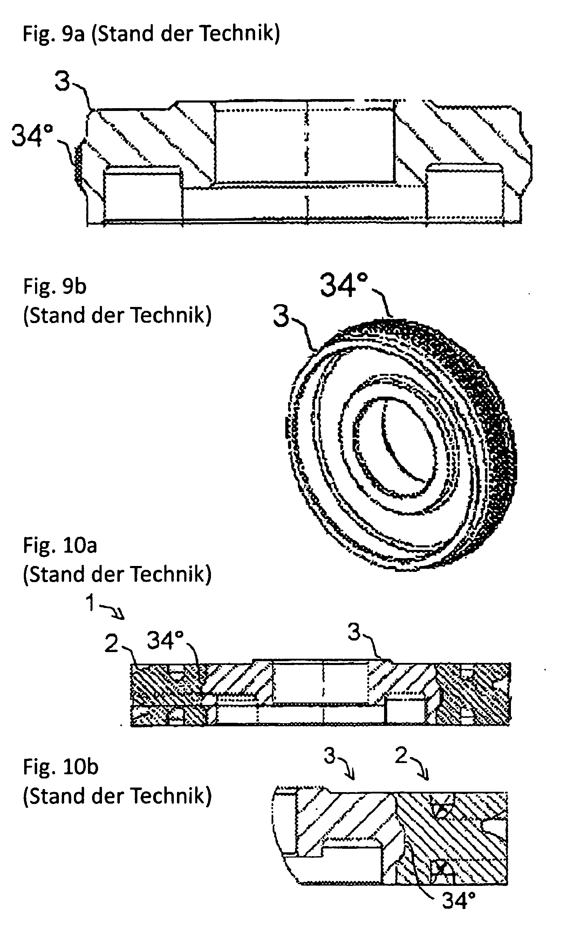

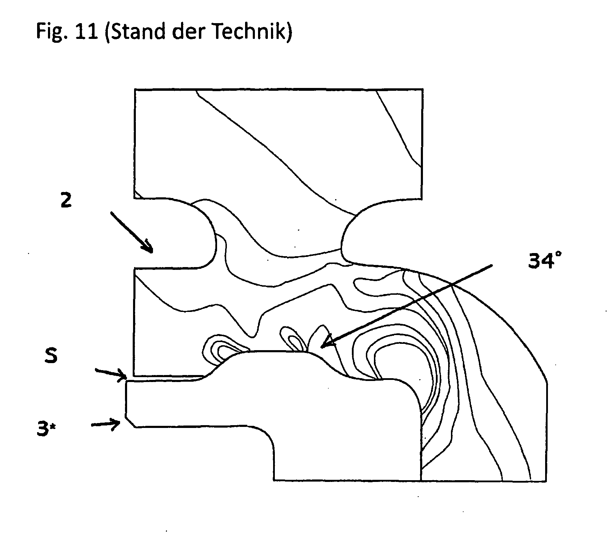

Fig. 9 zeigt eine perspektivische Ansicht und eine Schnittansicht eines Einlageteils gemäß dem Stand der Technik, bei dem im Umfangsbereich in radialer Richtung des Einlageteils Erhebungen ausgebildet sind, welche in Art einer Verzahnung dazu dienen sollen, mit einem umgebenden Material eines Zahnrings formschlüssig in Eingriff zu treten. Fig. 10 zeigt zwei weitere diesbezügliche Schnittdarstellungen, bei welchen zusätzlich ein Zahnring dargestellt ist. Wie dies aus Fig. 11 erkennbar ist, würde im Fall eines Anspritzens von Material von einer in axialer Richtung des auszubildenden Zahnrads liegenden Angussstelle aus zwar Material um solche Erhebungen 34° fließen. Jedoch würde beim Erkalten bzw. Aushärten des Gussmaterials auf der vom Gussansatz abgewandten Seite der Erhebungen 34° ein Spalt S zwischen dem derart ausgebildeten Zahnkranz 2 und dem Einlageteil 3* entstehen.

Die Aufgabe der Erfindung besteht darin, ein Zahnrad der eingangs genannten Art bereitzustellen, welches einen vorteilhaften Verlauf von Schwundspannungen aufweist.

Diese Aufgabe wird durch ein Zahnrad mit den Merkmalen des Patentanspruchs 1 oder mit den Merkmalen des Patentanspruchs 2 gelöst.

Es ist ein Zahnrad mit einem Zahnkranz und mit einem Einlageteil vorgesehen, dessen Außendurchmesser größer als der halbe Außendurchmesser des Zahnrads ist, wobei das Einlageteil mittels Schirmguss umspritzt ist bzw. verfahrensgemäß bei der Herstellung umspritzt wird.

Der Zahnkranz ist bzw. wird mittels des Schirmgusses als das Einlageteil umgebende Komponente ausgebildet. Im Vergleich zum bekannten Umspritzen werden dadurch Nahtstellen vermieden, welche beim Einspritzen von Kunststoff von mehreren in radialer Richtung über den Umfang verteilten Einspritzstellen aus entstehen würden. Das Fehlen von solchen Nahtstellen führt zu einer erhöhten Festigkeit in Rotationsrichtung eines solchen bevorzugten Zahnrads.

Der Zahnkranz ist mittels des Schirmgusses einschließlich einer außenseitigen Zahnstruktur ausgebildet. Die Ausbildung der außenseitigen Zahnstruktur zusammen mit dem Körper des Zahnkranzes erspart einen späteren Fräsvorgang zum Ausbilden von Zähnen aus einem massiven Körper und somit einen vollständigen eigenständigen Fertigungsschritt.

Das Einlageteil weist gemäß der Erfindung nach Anspruch 1 unter anderem außenseitig zum Zahnkranz hin Vertiefungen auf, in die Material des Zahnkranzes eingedrungen ist. Solche Vertiefungen sind somit außenseitig, dass heißt an einer radialen Außenseite des Einlageteils zum Zahnkranz hin ausgebildet. Zumindest ein Teil der Vertiefungen ist bevorzugt als globoidartige Vertiefungen ausgebildet. Solche insbesondere globoidartigen Vertiefungen ermöglichen ein besonders effektives Einfließen von Zahnkranzmaterial, wobei außerdem beim Erkalten des Zahnkranzmaterials eine Spaltbildung zwischen Zahnkranz und Einlageteil vermieden wird.

Das Einlageteil weist gemäß der Erfindung nach Anspruch 2 unter anderem außenseitig zum Zahnkranz hin eine außermittige ringförmige Erhebung auf, welche in Material des Zahnkranzes eingedrungen ist. Eine solche Erhebung ist außenseitig, dass heißt an einer radialen Außenseite des Einlageteils zum Zahnkranz hin ausgebildet. Die außermittige Erhebung ist zur Angussseite des Schirmgusses hin außermittig versetzt angeordnet.

Das Einlageteil ist vorzugsweise aus Metall ausgebildet und das Außenteil aus Kunststoff. Das Einlageteil kann alternativ auch mit einem Metallwerkstoff umspritzt werden.

Es wird mittels des Schirmgusses an einer Einlageteilwandung in achsialer Richtung des Einlageteils ein seitlicher Gusskörper erzeugt. Ein mittels des Schirmgusses erzeugter in achsialer Richtung seitlicher Körper wird abschließend wieder abgetrennt. Der Zahnkranz wird bereits mittels des Schirmgusses einschließlich einer außenseitigen Zahnstruktur ausgebildet.

Durch das Umspritzen mittels eines Schirmgussverfahrens wird eine hohe Festigkeit am Zahnkranz erreicht, da dieser keine Bindenaht aufweist und somit keine vorgegebene Sollbruchstelle.

Vorteilhafterweise wird der Schirmanguss sehr dickwandig ausgeführt, insbesondere mit einer Breite seitlich des Einlageteils von mehr als 60%, insbesondere von etwa 60% bis 150%, einer größten Wanddicke des Zahnkranzes, um den Zahnkranz beim Spritzgießen lunkerfrei bzw. blasenfrei füllen zu können.

Vertiefungen und Erhebungen im Übergangsbereich zwischen der Einlage und dem Zahnkranz, wobei unter dem Zahnkranz vorliegend auch ein zwischen den eigentlichen Zähnen und dem Einlageteil ausgebildeter ringförmiger Abschnitt zu verstehen ist, bewirken eine gute Drehmoment-Mitnahme und Axialkraft-Übertragung aufgrund des dadurch bedingten Formschlusses an der Nabe.

Ein derartiges Bauteil inklusive Schirmanguss weist üblicherweise auch hohe axiale Spannungen auf. Der Schirmanguss zieht den Zahnkranzring axial in Richtung des Schirmangusses. Dadurch bedingt führen Anguss-ferne Erhebungen auf dem als Stahlnabe ausgebildeten Einlageteil zur Aufweitung des Zahnkranzes und zu einem Abheben des Zahnkranzes von dem Einlageteil. Gemäß Anspruch 2 ist daher unter anderem eine axiale Sicherung in Form einer ringförmigen Erhebung außermittig auf der angussnahen Seite an dem Außenumfang des Einlageteils vorgesehen. Angussfern werden an dem Einlageteil an dessen Außenumfang nur Vertiefungen vorgesehen, so dass Abhebungen weitmöglichst vermieden werden.

Ein Ausführungsbeispiel wird nachfolgend anhand der Zeichnung näher erläutert. Soweit in verschiedenen der Figuren gleiche Bezugszeichen verwendet werden, handelt es sich um jeweils gleiche oder gleich wirkende Komponenten oder Funktionsmerkmale, so dass diesbezüglich auch die Beschreibungen anderer Figuren berücksichtigt werden können. Es zeigen:
- Fig. 1a-1c: Komponenten von drei Fertigungsschritten eines Zahnrads in perspektivischer Seitenansicht,
- Fig. 2a-2c: Komponenten von drei Fertigungsschritten eines Zahnrads in seitlicher Schnittansicht,
- Fig. 3a-3d: verschiedene perspektivische Ansichten und Schnittansichten eines beispielhaften Zahnrads gemäß Fig. 1 und 2,
- Fig. 4: eine perspektivische Ansicht eines Einlageteils gemäß einer Ausführungsform mit außermittig angeordneten Erhebungen am Außenumfang,
- Fig. 5a und 5b: eine Seitenansicht und eine Ausschnittsvergrößerung des Einlageteils gemäß Fig. 4 zur Veranschaulichung von solchen Erhebungen am Umfangsbereich,
- Fig. 6: eine vergrößerte Schnittansicht durch das Einlageteil gemäß Fig. 4 und 5,
- Fig. 7: eine vergrößerte Teilschnittdarstellung als Spannungsdiagramm durch einen Übergangsbereich zwischen einem Einlageteil mit einer Vertiefung und einem daran mittels Schirmguss angespritzten Zahnkranz,
- Fig. 8: eine derartige vergrößerte Schnittdarstellung eines Spannungsdiagramms im Fall einer außermittig angeordneten Erhebung am Außenumfang des Einlageteils,
- Fig. 9a und 9b: eine perspektivische Seitenansicht und eine Schnittansicht eines Einlageteils mit mittigen Erhebungen am Außenumfang gemäß dem Stand der Technik,
- Fig. 10a und 10b: eine weitere Schnittdarstellung und eine Ausschnittsvergrößerung im Schnitt der Ausführungsform gemäß Fig. 9 mit in Umfangsrichtung angespritztem Zahnkranz gemäß dem Stand der Technik und
- Fig. 11: ein Spannungsdiagramm eines vergrößerten Ausschnitts einer solchen Ausführungsform mit einer mittigen Erhebung am Außenumfang des Einlageteils gemäß dem Stand der Technik.

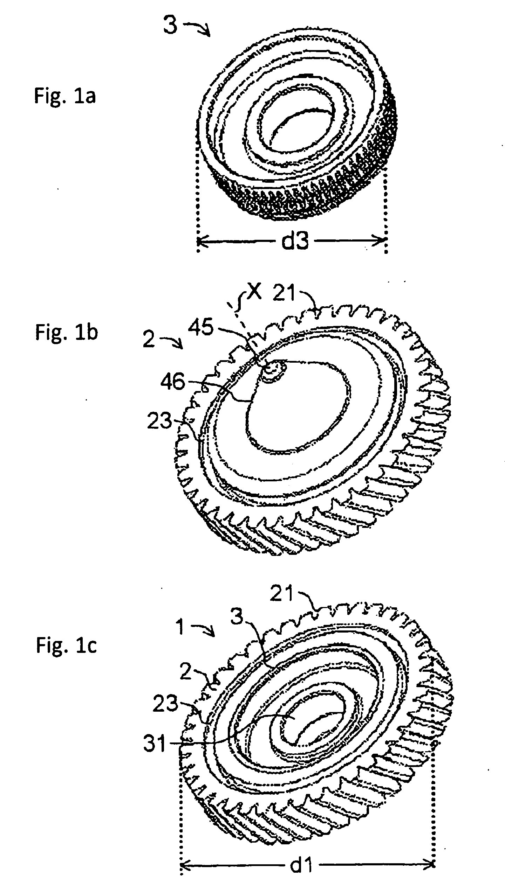

Wie dies aus Fig. 1 ersichtlich ist, wird ein beispielhaftes Zahnrad 1 in mehreren Herstellungsschritten gefertigt. In einem ersten Herstellungsschritt wird ein Einlageteil 3 bereitgestellt, welches die eigentliche Nabe ausbildet. Bei dem Einlageteil 3 handelt es sich vorzugsweise um ein aus Metall, insbesondere Stahl gefertigtes Einlageteil zum Ausbilden beispielsweise einer für sich bekannten Stahlnabe.

In einem nachfolgenden Herstellungsschritt wird dieses Einlageteil 3 zum Ausbilden eines Zahnkranzes 2 umspritzt, wobei zum Umspritzen ein Schirmguss-Verfahren verwendet wird. Entsprechend zeigt die mittlere Abbildung das mit Kunststoff in Blickrichtung vollständig umspritzte Einlageteil, welches in Umfangsrichtung bereits eine Zahnstruktur 21 aufweist. Eine solche Zahnstruktur 21 kann direkt mitgegossen werden. Beim Schirmguss wird das Einlageteil 3 aus axialer Richtung einer Achse X, welche vorzugsweise die Rotationsachse des Zahnrads ausbildet, umspritzt. Dargestellt ist die Seite, von welcher aus das Einlageteil 3 umspritzt ist, wobei die mittlere Abbildung einen Zwischenschritt der Herstellung darstellt, bei welchem ein Schirmanguss 46 noch seitlich des Einlageteils ausgebildet ist. Mittig bzw. axial ist ein Anguss 45 zu erkennen.

Der Schirmanguss 46 bedeckt eine in axialer Richtung gelegene Seitenwandung des Einlageteils 3 mit einer solchen Dicke, dass beim Spritzguss ein blasenfreies Spritzen auch von abgelegenen Bereichen aus Sicht des Angusspunktes ermöglicht wird. Die Dicke des Angussmaterials in axialer Richtung seitlich des Einlageteils 3 beträgt vorzugsweise mehr als 60%, insbesondere etwa 60% bis 150% der breitesten Dicke des auszubildenden Zahnkranzes 2 in dessen axialer Erstreckung. Insbesondere abhängig von dem fluiden Verhalten des beim Schirmguss verwendeten Materials kann jedoch auch eine geringere oder größere Dicke zur Erzielung eines optimalen Ergebnisses erforderlich werden.

Ein Schirmguss ermöglicht insbesondere auch die Ausbildung einer Nut 23 oder ähnlicher vertiefender Strukturen in einer in axialer Richtung gelegenen Seitenwandung des mittels des Spritzgusses ausgebildeten Zahnkranzes 2.

Nachfolgend wird der Schirmanguss 46 von der Seite des Einlageteils 3, beispielsweise mittels eines spanenden Verfahrens, abgetrennt. Dadurch wird letztendlich das in Fig. 1 rechts dargestellte Zahnrad erzeugte, welches das zentrale Einlageteil 3 mit einer mittigen Wellenaufnahme 31 zeigt, wobei das Einlageteil 3 in Umfangsrichtung bereits mit dem fertigen Zahnkranz 2 einschließlich einer Zahnstruktur 2 und gegebenenfalls nutförmigen Strukturen wie der Nut 23 umspritzt ist.

Insbesondere bei einem Vergleich der linken und der rechten Abbildung in Fig. 1 ist erkennbar, dass eine solche Verfahrensweise insbesondere auch die Fertigung von Zahnrädern 1 mit einem großen Einlageteil 3 ermöglicht. Unter einem großen Einlageteil 3 wird ein Einlageteil 3, verstanden, dessen Außendurchmesser d3 größer als der Außendurchmesser d1 des fertigen Zahnrads 1 ist.

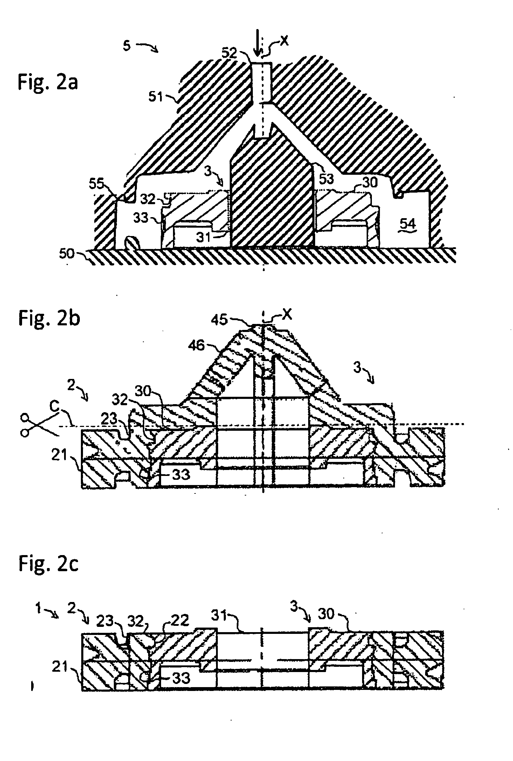

Fig. 2 zeigt übereinander drei Herstellungsschritte zum Herstellen eines derartigen Zahnrads in Schnittansicht. Die oberste Darstellung zeigt das Einlageteil 3 auf einem Untergrund 50 bzw. Werkzeugunterteil Werkzeugs 5. In die Wellenaufnahme 31 des Einlageteils 3 ist ein Einsatz eingesetzt, welcher ein Einfließen von Spritzussmaterial während des Spritzgießens verhindert. Mit einem Abstand oberhalb und in Umfangsrichtung außenseitig des Einlageteils 3 ist ein Werkzeugoberteil 51 auf den Untergrund 50 aufgesetzt. Entsprechend entsteht somit ein Spritzgussraum 54, in welchem während des Spritzgusses der Zahnkranz 2 sowie in axialer Richtung seitlich einer Seitenwand 30 des Einlageteils 3 ein Schirmanguss 46 ausgebildet wird. Das Werkzeugoberteil 51 weist einen Einspritzkanal 52 zum Einspritzen des Spritzgussmaterials auf, wobei der Einspritzkanal 52 vorzugsweise mittig und in axialer Richtung zur Achse X des auszubildenden Zahnrads verläuft. Das Werkzeugoberteil 51 und der Untergrund 50 weisen vorzugsweise bereits Werkzeugstrukturen 55 auf, welche zur Ausbildung beispielsweise der Nut 23 und zur Ausbildung von einer Zahnstruktur entsprechend geformt sind.

Ein mit einer derartigen Anordnung gespritztes Element besteht somit, wie dies in der mittleren Darstellung von Fig. 2 gezeigt ist, aus dem Einlageteil 3, welches in Umfangsrichtung vom Zahnkranz 2 und in axial seitlicher Richtung vom Schirmanguss 46 umspritzt ist. In Umfangsrichtung weist das Einlageteil 3 an seiner Oberfläche Verzahnungsstrukturen auf, welche dazu dienen, eine formschlüssige Verbindung zwischen dem Außenumfang des Einlageteils 3 und dem Innenumfang des Zahnkranzes 2 auszubilden. Dargestellt sind als Verzahnungsstrukturen zwei verschiedenartige Vertiefungen 32, 33, die in der radial außenseitigen Umfangswand des Einlageteils 3 ausgebildet sind und während des Spritzgießens mit dem Spritzgussmaterial ausgefüllt werden. Eine erste Vertiefung 32 ist beispielsweise in Art einer in Umfangsrichtung bzw. Rotationsrichtung umlaufenden Nut ausgebildet, um einen in axialer Richtung der Achse X stabilisierende bzw. haltende Verzahnungsstruktur auszubilden. Diese erste Vertiefung 32 ist dabei außermittig des Außenumfangs des Einlageteils 3 und zwar der Angussseite zugewandt außermittig am Außenumfang des Einlageteils 3 ausgebildet.

Eine Vielzahl zweiter Vertiefungen 33 ist achsparallel zur Achse X ausgebildet und ist vorzugsweise globoidartig geformt. Diese Vielzahl zweiter Vertiefungen 33 bewirkt nach dem Einfließen des Spritzgussmaterials und dessen Aushärtung eine formschlüssige Verbindung zum Zahnkranz 2, welche eine gute Kraftübertragung in Rotationsrichtung ermöglicht.

Nach einem Abtrennen längs einer Trennungslinie C mittels beispielsweise eines spanenden entsteht das fertige Zahnrad 1, welches unten in Fig. 2 dargestellt ist.

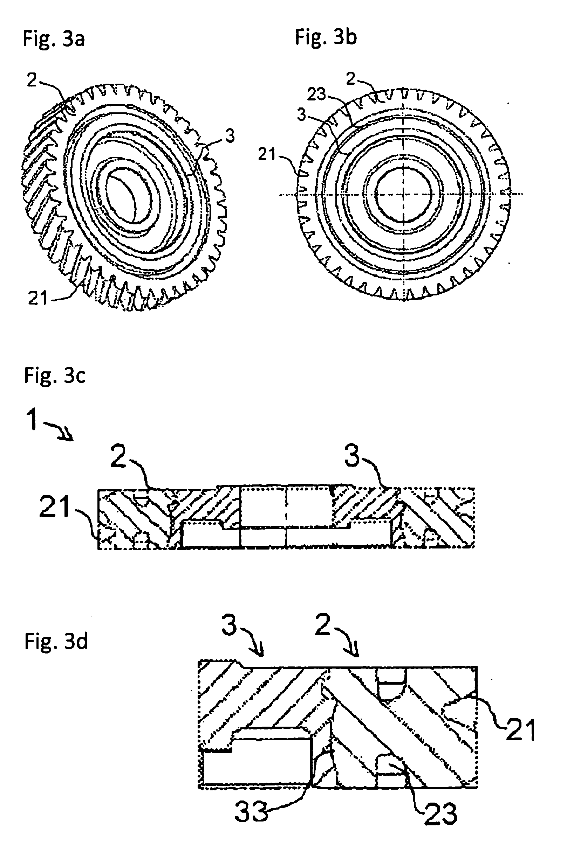

Fig. 3 zeigt weitere Ansichten und Details des anhand Fig. 2 dargestellten Zahnrads 1.

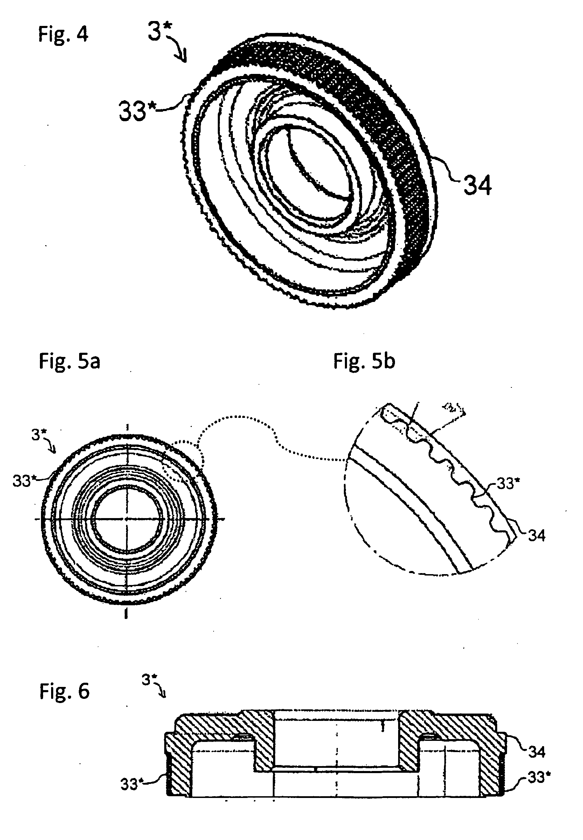

Fig. 4 bis 6 zeigen eine gegenüber den vorstehenden Figuren modifizierte Ausführungsform. Anstelle einer ersten Vertiefung in Art einer umlaufenden Nut (32 in Fig. 1) sind auf der in radialer Richtung außenseitigen Umfangsfläche des Einlageteils 3* außermittige Erhebungen 34 ausgebildet, welche nach dem Gießen in das ausgehärtete Material des Zahnkranzes eingreifen. Diese Erhebungen 34 sind dabei außermittig zu einer Angussseite für den Zahnkranz hin angeordnet, um ein Abheben des Angussmaterials während des Erstarrungs- bzw. Erkaltungsvorgangs beim Aushärten zu verhindern. Derartige Erhebungen 34 können dabei wie dargestellt in Umfangsrichtung verlaufen, um einen formschlüssigen Halt zwischen dem Einlageteil 3* und dem Zahnkranz in axialer Richtung der Ache X zu bilden.

Vorzugsweise weist das Einlageteil 3* in einem zu der Erhebung 34 benachbarten Umfangsabschnitt wieder achsparallele Vertiefungen 33* auf, welche bei der dargestellten Ausführungsform z.B. länglich und nicht glogoidartig ausgebildet sind. Die Radien dieser Vertiefungen 33* sind dabei so gewählt, dass das Spritzgussmaterial beim Spritzgießen in diese hineinfließen kann und beim nachfolgenden Aushärten eine Abhebung ganz oder zumindest möglichst weitgehend vermieden wird.

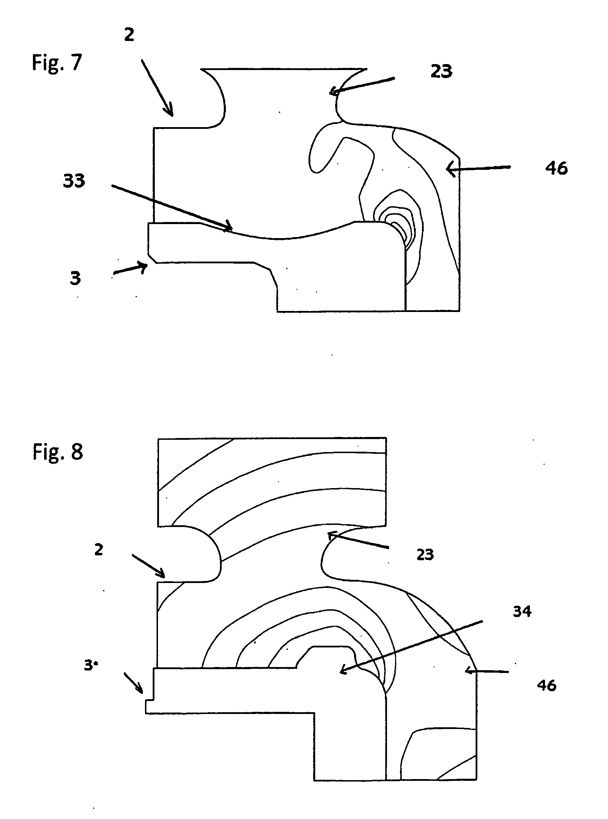

Anhand Fig. 7 ist ein Spannungsdiagramm für einen Umfangsabschnitt des Übergangsbereichs zwischen dem Einlageteil 3 und dem Zahnkranz 2 nach dem Spritzgießen mittels des Schirmgusses und vor dem Abtrennen eines seitlichen Schirmangusses dargestellt. Insbesondere bei einem Vergleich mit Fig. 11, welche eine Ausgestaltung gemäß dem Stand der Technik darstellt, ist anhand Fig. 7 ein vorteilhafter Spannungsverlauf erkennbar, welcher ein Abheben des erhärteten Kunststoffmaterials des Zahnkranzes in einem angussfernen Abschnitt verhindert. Durch das Aushärten zieht sich das Material, vorzugsweise Kunststoff, lediglich in Richtung des Angusses bzw. der Angussseite zurück, wie dies erkennbar ist, führt jedoch nicht oder nicht nennenswert zu einem Abheben von Umfangsfläche des Einlageteils 3.

Fig. 8 zeigt ein Spannungsdiagramm eines entsprechenden Ausschnitts des Übergangsbereichs zwischen dem Einlageteil 3* und dem Zahnkranz 2 der Ausführungsform gemäß Fig. 4 bis 6. Ebenfalls ist gut erkennbar, dass beim Aushärten bzw. Erkalten der Kunststoffmasse des Zahnkranzes 2 zwar eine Schrumpfung eintritt, welche zu einem Versatz am vom Anguss abgewandten Ende führt, jedoch tritt eine Spaltbildung mit einem Abheben des Kunststoffes als dem Gussmaterial von der benachbarten Oberfläche des Einlageteils 3* nicht oder in nur nicht-störendem Umfang auf.

## Patentansprüche

1. Zahnrad (1) mit
a) einem Zahnkranz (2) und einem Einlageteil (3), dessen Außendurchmesser (d3) größer als der halbe Außendurchmesser (d1) des Zahnrads (1) ist, wobei das Einlageteil (3) mittels Schirmguss umspritzt ist,
b) wobei das Einlageteil (3) außenseitig zum Zahnkranz (2) hin Vertiefungen (32, aufweist, in die Material des Zahnkranzes (2) eingedrungen ist, und
c) wobei eine erste Vertiefung der Vertiefungen (32, 33) der Angussseite zugewandt außermittig am Außenumfang des Einlageteils (3), und als in Umfangsrichtung umlaufenden Nut (32) ausgebildet ist,
**dadurch gekennzeichnet,**
d) **dass** die Nut (32) als einzige am Außenumfang des Einlageteils (3) in Umfangsrichtung umlaufende Nut (32) vorgesehen ist und
e) **dass** eine Vielzahl zweiter Vertiefungen (33) achsparallel zur Achse (X) ausgebildet ist und zwar ausschließlich auf der zur Angussseite abgewandten Seite der einzigen umlaufenden Nut (32).

2. Zahnrad (1) mit
a) einem Zahnkranz (2) und einem Einlageteil (3), dessen Außendurchmesser (d3) größer als der halbe Außendurchmesser (d1) des Zahnrades (1) ist, wobei das Einlageteil (3) mittels Schirmguss umspritzt ist,
b) einer Vielzahl von Vertiefungen (33*) im Außenumfang des Einlageteils (3), die achsparallel zur Achse (X) des Einlageteils (3) ausgebildet sind,
**dadurch gekennzeichnet, dass**
c) das Einlageteil (3) außermittig an seinem Außenumfang der Angussseite zugewandt eine ringförmige und sich in radialer Richtung erstreckende Erhebung (34) aufweist, welche in Material des Zahnkranzes (2) eingedrungen ist,
d) und dass die Vielzahl von Vertiefungen (33*) im Außenumfang des Einlageteils (3) auf der zur Angussseite abgewandten Seite der Erhebung (34) ausgebildet sind.

3. Zahnrad nach Anspruch 1, bei dem zumindest ein Teil der Vertiefungen als globoidartige Vertiefungen (33) ausgebildet ist.

4. Zahnrad nach einem vorstehenden Anspruch, bei dem das Einlageteil (3) aus Metall ausgebildet ist und der Zahnkranz (2) aus Kunststoff ausgebildet ist.

5. Zahnrad nach einem der Ansprüche 1 bis 3, bei dem das Einlageteil (3) mit einem Metallwerkstoff umspritzt ist.

## Claims

1. Gear wheel (1) with
a) a gear rim (2) and an insert (3), whose external diameter (d3)is greater than half of the external diameter (d1) of the gear wheel (1), the insert (3) being coated by extrusion by means of a diaphragm gate,
b) in which the insert (3) has indentations (32, 33) facing outward toward the gear rim (2), into which the material of the gear rim (2) penetrates, and
c) whereby a first indentation of the indentations (32, 33) is provided facing towards the gate side excentric on the external circumference of the insert (3) as an orbiting groove (32) running in circumferential direction,
**characterized in that**,
d) the groove (32) is designated as a solely single orbiting groove (32) on the external circumference of the insert (3) running in circumferential direction, and
e) a plurality of second indentations (33) being formed in direction parallel to axis (X) namely exclusively on the side of the solely single orbiting groove (32) facing away from the gate side.

2. Gear wheel (1) with
a) a gear rim (2) and an insert (3), whose external diameter (d3) is greater than half of the external diameter (d1) of the gear wheel (1), the insert (3) being coated by extrusion by means of a diaphragm gate,
b) a plurality of indentations (33*) in the external circumference of the insert (3), being formed in direction parallel to axis (X) of the insert (3),
**characterized in that**,
c) the insert (3) has circular off-centre protrusions (34) on its external circumference facing toward the gate side and extending radially, the protrusions (34) penetrating into the material of the gear rim (2), and
d) the plurality of indentations (33*) being formed in the external circumference of the insert (3) on the side of the protrusion (34) facing away from the gate side.

3. Gear wheel according to claim 1, in which at least one part of the indentations is formed as globoid-shaped indentations (33).

4. Gear wheel according to anyone of the foregoing claims, in which the insert (3) is made of metal and the gear rim (2) is made of plastic.

5. Gear wheel according to anyone of the claims 1 to 3, in which the insert (3) is coated by extrusion with a metallic material.

## Revendications

1. Roue dentée (1), comportant :
a) une couronne dentée (2) et une pièce formant insert (3) dont le diamètre extérieur (d3) est supérieur au demi-diamètre extérieur (d1) de la roue dentée (1), la pièce formant insert (3) étant munie d'un enrobage protecteur réalisé par injection,
b) la pièce formant insert (3) comporte sur son côté extérieur, des cavités (32, 33) tournées vers la couronne dentée (2), dans laquelle pénètre la matière de la couronne dentée (2), et
c) une première des cavités (32, 33) est réalisée sur le côté extérieur de coulée, tourné de façon décentrée à la périphérie extérieure de la pièce formant insert (3) et elle est constituée comme rainure (32) dans la direction périphérique,
**caractérisée en ce que**
d) la rainure (32) est l'unique rainure réalisée à la périphérie extérieure de la pièce formant insert (3) dans la direction périphérique, et
e) un ensemble de secondes cavités (33) est réalisé parallèlement à l'axe (X) exclusivement sur le côté de l'unique rainure périphérique (32) à l'opposé du côté de coulée.

2. Roue dentée (1) comportant :
a) une couronne dentée (2) et une pièce formant insert (3) dont le diamètre extérieur (d3) est supérieur au demi-diamètre extérieur (d1) de la couronne dentée (1), la pièce formant insert (3) étant enrobée par injection,
b) un certain nombre de cavités (33*) réalisées dans la périphérie extérieure de la pièce formant insert (3), ayant un axe parallèle à l'axe (X) de la pièce formant insert (3),
**caractérisée en ce que**
c) la pièce formant insert (3) comporte de façon excentrée par rapport à sa périphérie extérieure du côté de coulée, un bossage (34) annulaire, s'étendant dans la direction radiale, et qui pénètre dans la matière de la couronne dentée (2),
d) l'ensemble des cavités (33*) réalisées dans la périphérie extérieure de la pièce formant insert (3) est sur le côté du bossage (34) tourné vers le côté de coulée.

3. Roue dentée selon la revendication 1,
selon laquelle
au moins une partie des cavités est réalisée sous la forme de cavités (33) de type globoïdal.

4. Roue dentée selon les revendications précédentes,
selon laquelle
la partie formant insert (3) est en métal et la couronne dentée (2) est en matière plastique.

5. Roue dentée selon les revendications 1 à 3,
selon laquelle
la pièce formant insert (3) est enrobée d'un métal par injection.
